# EUROPÄISCHE PATENTSCHRIFT

(11) **EP 4 447 614 B1**
(45) Veröffentlichungstag und Bekanntmachung des Hinweises auf die Patenterteilung: **29.10.2025**
(21) Anmeldenummer: 24168652.6
(22) Anmeldetag: 05.04.2024
(51) Int. Cl.: H05B 6/12, G01K 1/00

(54) **SENSORVORRICHTUNG, HEIZEINRICHTUNG MIT EINER SENSORVORRICHTUNG UND KOCHFELD MIT MEHREREN HEIZEINRICHTUNGEN**
SENSOR DEVICE, HEATING DEVICE WITH A SENSOR DEVICE AND COOKING HOB WITH A PLURALITY OF HEATING DEVICES
DISPOSITIF DE DÉTECTION, DISPOSITIF DE CHAUFFAGE DOTÉ D'UN DISPOSITIF DE DÉTECTION ET PLAQUE DE CUISSON DOTÉE DE PLUSIEURS DISPOSITIFS DE CHAUFFAGE

(30) Priorität: 11.04.2023 DE 102023109093
(43) Veröffentlichungstag der Anmeldung: 16.10.2024
(73) Patentinhaber: E.G.O. Elektro-Gerätebau GmbH, 75038 Oberderdingen (DE)
(72) Erfinder: Föller, Thomas, 74193 Schwaigern (DE); Freis, Konstantin, 75015 Bretten (DE)
(74) Vertreter: Patentanwälte Ruff, Wilhelm, Beier, Dauster & Partner mbB

(56) Entgegenhaltungen:
- EP-A1- 3 079 443
- DE-A1- 102006 057 339
- DE-A1- 102010 063 224
- DE-A1- 102013 214 432
- DE-A1- 102016 218 269

## Beschreibung

Die Erfindung betrifft eine Sensorvorrichtung für ein Kochfeld bzw. zum Einsatz in einem Kochfeld, eine Heizeinrichtung mit einer Induktionsheizspule und mit einer solchen Sensorvorrichtung sowie ein Kochfeld, das mehrere solcher Heizeinrichtungen sowie Sensorvorrichtungen aufweist. Dabei soll die Sensorvorrichtung vor allem dazu dienen, eine Temperatur zu erfassen, insbesondere an einer Kochfeldplatte eines vorgenannten Kochfelds, unter der mehrere solcher Heizeinrichtungen angeordnet sind.

Es ist bekannt, einen Temperatursensor oben an einer Induktionsheizspule zu befestigen. Dieser Temperatursensor liegt an der Unterseite einer Kochfeldplatte an, unter der die Induktionsheizspule angeordnet ist. Dieser Temperatursensor ist zum Einen mittig an der Induktionsheizspule befestigt. Zum Anderen ist er auch direkt an der Induktionsheizspule befestigt.

Aus der EP 3 079 443 A1 ist es bekannt, induktiv arbeitende Topferkennungssensoren und auch Temperatursensoren zwischen benachbarten Induktionsheizspulen bzw. oberhalb eines Zwischenbereichs anzuordnen, wobei diese Sensoren ebenfalls an die Unterseite einer darüber verlaufenden Kochfeldplatte angedrückt sind. Hier ist ein Temperatursensor als diskretes Bauteil, insbesondere als THT-Bauteil, ausgebildet.

Aus der DE 10 2016 218 269 A1 ist ein Kochfeld mit bewegbaren Induktionsheizspulen unter einer Kochfeldplatte bekannt. An der Oberseite jeder Induktionsheizspule ist ein Temperatursensor vorgesehen, der stets an derselben Stelle der Induktionsheizspule angeordnet ist, auch während deren Bewegung.

Aus der DE 10 2006 057 339 A1 ist eine Haltevorrichtung für einen Temperatursensor bekannt, der in ein Kochfeld zwischen eine Kochfeldplatte aus Glaskeramik und eine Trägerplatte montiert wird. Die Haltevorrichtung weist wenigstens ein elastisches Element auf, um den Temperatursensor elastisch und mit Kraft an die Unterseite der Kochfeldplatte anzudrücken.

Aus der DE 10 2010 063 224 A1 ist ein weiteres Kochfeld bekannt, das einen Temperatursensor aufweist, der wiederum an eine Unterseite einer Kochfeldplatte angedrückt ist. Dabei kann er elastisch angedrückt werden, wobei er zum Schutz vor direkten äußeren Einflüssen von einem Aufnahmeteil umgeben ist.

Aus der DE 10 2013 214 432 A1 ist eine weitere Halteeinrichtung bekannt, mit der ein Temperatursensor unter einer Kochfeldplatte eines Kochfelds eingebaut werden soll. Eine Art Clips kann dabei in eine Ausnehmung in einer Leiterplatte unterhalb der Kochfeldplatte rastend eingesetzt werden. An seiner Oberseite weist er wärmeleitfähiges Material auf, an dem von unten wiederum der Temperatursensor wärmeleitend angedrückt ist.

### Aufgabe und Lösung

Der Erfindung liegt die Aufgabe zugrunde, eine eingangs genannte Sensorvorrichtung, eine damit versehene Heizeinrichtung sowie ein Kochfeld mit mehreren solcher Heizeinrichtungen und Sensorvorrichtungen zu schaffen, mit denen Probleme des Standes der Technik gelöst werden können und es insbesondere möglich ist, ein Sensorelement einfach und praxistauglich sowie möglichst vielseitig verwendbar in einem Kochfeld anzuordnen bzw. an Heizeinrichtungen zu befestigen.

Gelöst wird diese Aufgabe durch eine Sensorvorrichtung mit den Merkmalen des Anspruchs 1, durch eine Heizeinrichtung mit den Merkmalen des Anspruchs 10 sowie durch ein Kochfeld mit den Merkmalen des Anspruchs 14.

Vorteilhafte sowie bevorzugte Ausgestaltungen der Erfindung sind Gegenstand der weiteren Ansprüche und werden im Folgenden näher erläutert. Dabei werden manche der Merkmale nur für die Sensorvorrichtung, nur für die Heizeinrichtung oder nur für das Kochfeld erläutert. Sie sollen jedoch unabhängig davon sowohl für eine solche Sensorvorrichtung, für eine solche Heizeinrichtung als auch für ein solches Kochfeld selbständig und unabhängig voneinander gelten können. Der Wortlaut der Ansprüche wird durch ausdrückliche Bezugnahme zum Inhalt der Beschreibung gemacht.

Die Sensorvorrichtung für ein Kochfeld bzw. für eine Heizeinrichtung in dem Kochfeld weist ein Sensorelement auf, welches wiederum elektrische Anschlüsse aufweist. Diese elektrischen Anschlüsse sind vorteilhaft als Kabel ausgeführt, so dass das Sensorelement vorteilhaft ein zweiadriges oder zwei einadrige Anschlusskabel aufweist. Damit kann es an eine Steuerung, insbesondere eine Kochfeldsteuerung, angeschlossen werden zur Auswertung. Für das Sensorelement ist eine Halteeinrichtung vorgesehen, die das Sensorelement bevorzugt in genau vorgegebener Position und Ausrichtung hält, insbesondere bei bzw. nach Einbau in ein erfindungsgemäßes Kochfeld. Das Sensorelement ist vorteilhaft als diskretes Bauteil ausgebildet, beispielsweise als THT-Bauteil oder ähnlich einem THT-Bauteil, also mit einem Gehäuse und den vorgenannten elektrischen Anschlüssen, die drahtartig ausgebildet sein können und abstehen können. Die Halteeinrichtung besteht aus Kunststoff und weist einen oberen Haltebereich auf, in welchem das Sensorelement positionsgenau gehalten ist. Dabei wird das Sensorelement derart gehalten, dass es über die Halteeinrichtung übersteht oder aus dieser herausragt, insbesondere bei einem späteren Einbau derart, dass es den höchsten Punkt der Sensorvorrichtung bildet bzw. auch eine Heizeinrichtung überragt, an der es befestigt ist bzw. mit der zusammen es in einem Kochfeld angeordnet ist. Der Haltebereich ist dabei länglich ausgebildet, vorteilhaft mindestens dreimal so lang wie breit, so dass seine Länge mindestens 200 % seiner Breite betragen kann.

Des Weiteren weist die Halteeinrichtung einen Befestigungsabschnitt auf, der mit dem Haltebereich verbunden ist, insbesondere einteilig und einstückig verbunden ist. Sie können also als ein gemeinsames Kunststoffteil ausgebildet sein. Vorteilhaft ist der Befestigungsabschnitt unterhalb des Haltebereichs angeordnet bzw. ausgebildet. Dieser mindestens eine Befestigungsabschnitt steht von einer Längsrichtung des Haltebereichs seitlich ab, insbesondere in einer Richtung zwischen 80° und 100°, vorteilhaft rechtwinklig. Er kann dabei unterschiedlich weit seitlich abstehen, wie nachfolgend noch näher erläutert wird. Dieses seitliche Abstehen des Befestigungsabschnitts dient dazu, die Sensorvorrichtung an einer Heizeinrichtung zu befestigen.

Erfindungsgemäß weist der abstehende Befestigungsabschnitt Befestigungsvorsprünge und Befestigungsausnehmungen auf, mit denen die Sensorvorrichtung formschlüssig im Außenbereich der Heizeinrichtung angeordnet bzw. befestigt werden kann. Dazu steht er eben seitlich ab und ragt somit von dem Haltebereich bzw. seiner Projektion weg, so dass er zumindest ein Stück in die Heizeinrichtung eingreift, um daran befestigt zu werden. So ist es mit der Erfindung möglich, eine Sensorvorrichtung in einem Kochfeld bzw. außen an einer Heizeinrichtung dafür, also vorteilhaft zwischen zwei benachbarten Heizeinrichtungen, anzuordnen. Somit kann zum Einen in diesem Bereich etwas gemessen werden, insbesondere eine Temperatur. Zum Anderen beeinträchtigt dies die Funktion der Heizeinrichtung oder deren Heizwirkung in keiner Weise, da die Sensorvorrichtung bzw. zumindest das Sensorelement nicht darauf bzw. darüber angeordnet ist, sondern an dessen Seite.

In Ausgestaltung der Erfindung kann die Halteeinrichtung im genannten Haltebereich als konkrete Ausgestaltung eine wannenartige und längliche Sensorelementaufnahme aufweisen, innerhalb derer das Sensorelement angeordnet ist. So kann es in der Sensorelementaufnahme beispielsweise geklemmt gehalten werden, mindestens kraftschlüssig, vorteilhaft auch formschlüssig. Dadurch ist es möglich, dass das Sensorelement beispielsweise nach einer Vormontage der Sensorvorrichtung nicht herausfällt oder seine Position bis zur endgültigen Montage in einem Kochfeld derart ändern kann, dass seine Funktion negativ beeinträchtigt ist.

Eine genannte wannenartige Sensorelementaufnahme kann, entweder als mechanischer Schutz, zur Halterung oder als thermische Dämmung, seitlich bzw. parallel zu ihrer Längsrichtung je eine Wandung auf beiden Seiten des Sensorelements aufweisen. So ergeben diese Wandungen einerseits die genannte Wannenform, und andererseits kann auch der vorgenannte Zweck erfüllt werden. Diese beiden Wandungen können vorzugsweise mindestens 20% bis 50% unterhalb des höchsten Punkts des Sensorelements bleiben, vorteilhaft auf ihre vertikale Höhe oder auf die vertikale Höhe des Sensorelements bezogen, so dass sichergestellt ist, dass das Sensorelement tatsächlich den höchsten Punkt der Sensorvorrichtung bildet. Damit kann es sicher an der Unterseite einer genannten Kochfeldplatte anliegen.

In weiterer Ausgestaltung der Erfindung kann die Halteeinrichtung für das Sensorelement einteilig oder einstückig aus Kunststoff hergestellt sein, besonders vorteilhaft als einziges Teil. Eine solche Herstellung bietet sich durch Kunststoffspritzguss an, vorteilhaft aus einem einzigen Kunststoff. Ein möglicher Kunststoff kann ein Silikon sein, alternativ können es andere Kunststoffe mit Wärmebeständigkeit bis zu 120°C oder sogar 200°C sein. Der Kunststoff sollte zwar eine gewisse Elastizität aufweisen, aber nicht zu hart sein und nicht zu weich sein. Eine Härte zwischen 30 Shore A und 80 Shore A bietet sich hier an, vorzugsweise zwischen 45 Shore A und 70 Shore A.

In einer ersten grundsätzlichen Ausgestaltung der Erfindung kann der Befestigungsabschnitt mindestens so lang sein wie die halbe Länge des Haltebereichs bzw. der Sensorelementaufnahme in deren Längsrichtung, also eher länglich ausgebildet sein. Bevorzugt kann er deutlich länger ausgebildet sein, wie nachfolgend noch näher erläutert werden wird, vorteilhaft zweimal oder dreimal so lang. Gleichzeitig kann bei dieser Ausgestaltung der Erfindung der Befestigungsabschnitt flach sein, insbesondere sollte er im Wesentlichen gleichbleibende Dicke aufweisen. Lediglich an seinem abstehenden freien Ende kann er etwas dünner ausgebildet sein zum leichteren Einführen oder Einstecken in eine genannte Heizeinrichtung. Dies wird nachfolgend noch näher erläutert.

In Weiterbildung der Erfindung kann der Befestigungsabschnitt der Halteeinrichtung zwei, insbesondere genau zwei, Befestigungsvorsprünge an einer Seite der Halteeinrichtung aufweisen, wobei zwischen diesen Befestigungsvorsprüngen eine Befestigungsausnehmung vorgesehen ist bzw. von diesen gebildet wird. Die Befestigungsausnehmung weist zwei gegenüberliegende parallele Seiten auf und kann insbesondere rechteckige Form aufweisen. Diese gegenüberliegenden Seiten werden dann jeweils von einer nach innen bzw. zueinander weisenden Seite der genannten Befestigungsvorsprünge gebildet. Dabei liegen die Befestigungsvorsprünge und die Befestigungsausnehmung dazwischen vorteilhaft in einer Ebene, welche parallel ist zu einer Kochfeldplatte. Derartige Befestigungsvorsprünge können dann zwischen 300% und 600% der vorgenannten Länge des Haltebereichs bzw. der Sensorelementaufnahme seitlich von der Halteeinrichtung abstehen.

In bevorzugter Weiterbildung der Erfindung können von den beiden gegenüberliegenden Längsseiten der Halteeinrichtung jeweils Befestigungsabschnitte in entgegengesetzten Richtungen abstehen. Sie können einerseits dergestalt ähnlich sein, dass an beiden Befestigungsabschnitten je zwei Befestigungsvorsprünge mit einer Befestigungsausnehmung dazwischen ausgebildet sind, wie es vorstehend erläutert worden ist. Gemäß einer Möglichkeit können diese beiden gegenüberliegenden Befestigungsabschnitte identisch bzw. spiegelbildlich ausgebildet sein. Alternativ kann die Länge auf einer Seite deutlich größer sein als auf der anderen Seite, wobei vorzugsweise eine Breite der Befestigungsausnehmungen gleich ist. So kann bei einer Befestigung zwischen zwei Heizeinrichtungen die eine Seite mit den längeren Befestigungsvorsprüngen alleine bereits für eine Positionssicherung bzw. entgegen einem Verschieben oder Verdrehens in einer Ebene parallel zur Kochfeldplatte dienen. Der kürzere Befestigungsabschnitt auf der gegenüberliegenden Seite muss dann nur noch für eine endgültige Fixierung sorgen, was leichter möglich ist.

In einer zweiten grundsätzlichen Ausgestaltung der Erfindung kann ein Befestigungsabschnitt der Halteeinrichtung, vorteilhaft jeder Befestigungsabschnitt der Halteeinrichtung, kürzer sein als die halbe Länge des Haltebereichs bzw. der Sensorelementaufnahme, und zwar in der vorgenannten seitlich abstehenden Richtung. Er kann sogar kürzer sein als 25%. Bevorzugt sind dann zwei solcher kurzen Befestigungsabschnitte an gegenüberliegenden Seiten der Halteeinrichtung vorgesehen, insbesondere identisch ausgebildete Befestigungsabschnitte. Dabei sind vorteilhaft oben und unten an einem solchen Befestigungsabschnitt sowie parallel zum Haltebereich ein oberer Randabschnitt und ein unterer Randabschnitt vorgesehen, die als Befestigungsvorsprünge verlaufen und jeweils eine Befestigungsausnehmung zwischen sich aufweisen. Diese Befestigungsausnehmung sollte gleichbleibende Höhe aufweisen, zumindest im Wesentlichen, und in einer planen Ebene verlaufen. Dies dient dazu, wie nachfolgend noch näher erläutert werden wird, dass die Halteeinrichtung damit auf eine dünne Platte oder Scheibe einer Heizeinrichtung aufgesteckt werden kann zur Halterung daran. Entlang beider Seiten der Halteeinrichtung sind die Befestigungsabschnitte vorteilhaft identisch ausgebildet, also spiegelbildlich vorgesehen. Auch hier können die Befestigungsabschnitte vorteilhaft in entgegengesetzten Richtungen von der Halteeinrichtung abstehen, wenngleich viel weniger weit als bei der vorgenannten ersten grundsätzlichen Ausgestaltung.

Während die zuvor beschriebene Sensorelementaufnahme am Haltebereich den obersten Bereich der Sensorvorrichtung bilden soll, ob mit oder ob ohne Sensorelement, können die genannten Befestigungsabschnitte den untersten Bereich bilden. Somit weist die Sensorvorrichtung eine relativ niedrige Höhe auf, ist also im Wesentlichen flach ausgebildet. So wird eine Bauhöhe beim Einbau in ein Kochfeld unterhalb einer Kochfeldplatte nicht unnötig erhöht, lediglich das Sensorelement sollte wie vorbeschrieben etwas nach oben über die Heizeinrichtungen überstehen.

Eine erfindungsgemäße Heizeinrichtung, die mindestens eine Induktionsheizspule sowie mindestens eine vorgenannte Sensorvorrichtung aufweist, kann mindestens zwei eigenstabile Flächenteile aufweisen. Diese sollten elektrisch isolierend ausgebildet sein. Vorteilhaft bestehen sie aus Mikanit oder weisen Mikanit auf, sie können also als dünne Mikanitscheiben ausgebildet sein. Ihre Dicke kann zwischen 0,3 mm und 2 mm liegen. An diesen Flächenteilen ist die Induktionsheizspule angeordnet, und vorteilhaft verlaufen sie jeweils in parallelen Ebenen. Besonders vorteilhaft ist die Induktionsheizspule zwischen zwei solchen Flächenteilen angeordnet. Eine genannte erfindungsgemäße Sensorvorrichtung ist dann an einem Außenrand der Induktionsheizspule an und teilweise zwischen diesen beiden Flächenteilen befestigt, wobei dazu der Befestigungsabschnitt zumindest teilweise zwischen die Flächenteile eingreift. Dabei sollte er weitgehend oder vollständig spielfrei eingreifen für eine genaue und positionstreue Anordnung des Sensorelements. Selbst wenn die Heizeinrichtung mehr als zwei solcher Flächenteile aufweist, beispielsweise drei Flächenteile, reicht es für eine Befestigung der Sensorvorrichtung bzw. der Halteeinrichtung an der Heizeinrichtung, wenn zwei dieser Flächenteile genutzt werden. Je nach vorbeschriebener Ausgestaltung der Halteeinrichtung kann dies unterschiedlich sein. Eine Halteeinrichtung gemäß der vorbeschriebenen ersten grundsätzlichen Ausgestaltung kann einfach weit oder überwiegend zwischen die beiden Flächenteile eingreifen und somit in vertikaler Richtung gesichert sein. Gegen eine horizontale Bewegung können die langen Befestigungsabschnitte an einem Bestandteil der Heizeinrichtung bzw. Induktionsheizspule angreifen. Vorzugsweise kann sie daran vorgesehene Ferritstäbe seitlich übergreifen, so dass diese insbesondere in der vorgenannten Befestigungsausnehmung liegen. Gemäß der zweiten grundsätzlichen Ausgestaltung der Erfindung kann eine Halteeinrichtung auf den Rand eines Flächenteils aufgesteckt sein, so dass sie zwar im Wesentlichen an diesem einen Flächenteil gehalten ist, aber dennoch in den Bereich zwischen diesem Flächenteil und dem anderen Flächenteil eingreift.

Vorgenannte Ferritstäbe sind bevorzugt an einem Flächenteil angeordnet, besonders bevorzugt an einem mittleren oder untersten Flächenteil der Heizeinrichtung, vorzugsweise an dessen Unterseite. Hierfür kann eine grundsätzlich aus dem Stand der Technik bekannte Aufnahmeeinrichtung vorgesehen sein, beispielsweise in gitterartiger Ausbildung. Diese sind auf alle Fälle stabil genug, um die dabei entstehenden Kräfte ohne Gefahr einer Beschädigung aufzunehmen.

Gemäß der zuvor beschriebenen zweiten grundsätzlichen Ausgestaltung weist die Halteeinrichtung eine Art horizontalen Schlitz zwischen zwei Befestigungsvorsprüngen auf, wobei die Halteeinrichtung mit diesem Schlitz auf eine Außenkante eines vorgenannten Flächenteils aufgesteckt oder aufgedrückt worden ist. Auch so kann die Sensorvorrichtung an einer Heizeinrichtung befestigt werden. Wenn an den beiden gegenüberliegenden Längsseiten der Halteeinrichtung derartige Befestigungsvorsprünge mit einem Schlitz dazwischen vorgesehen sind, so kann die Sensorvorrichtung damit an den Außenkanten in einem schmalen Zwischenraum zwischen zwei benachbarten Induktionsheizspulen bzw. Heizeinrichtungen befestigt werden. Diese Befestigung ist stabil und sicher gegen Verkippen und Verrücken bzw. Verschieben. Insbesondere kann sie auch Kräfte von oben gut aufnehmen, die entstehen, wenn die Sensorvorrichtung mit dem Sensorelement mit einer gewissen Anlagekraft gegen die Unterseite der Kochfeldplatte angedrückt wird.

Bei einer nochmals weiteren Ausgestaltung der Sensorvorrichtung kann mindestens ein Befestigungsvorsprung der Halteeinrichtung Rastmittel aufweisen, um an einer Heizeinrichtung mittels Rasten befestigt zu werden bzw. eingerastet zu werden. Vorteilhaft sind zwei Befestigungsvorsprünge an der Sensorvorrichtung vorgesehen, die gleichartige Rastmittel aufweisen. Dazu können die Rastmittel eine federnde Rastzunge aufweisen, deren Federrichtung rechtwinklig zur Längserstreckung dieses Befestigungsvorsprungs und/oder rechtwinklig zur Fläche der Heizeinrichtung sein kann. In weiterer Ausgestaltung können die Rastmittel bzw. die Rastzunge von dem restlichen bzw. sonstigen Befestigungsvorsprung rahmenartig umgeben sein, wodurch sie geschützt sind beim Einstecken in eine Rastkammer oder Rastaufnahme einer Halteaufnahme odgl., die an der Heizeinrichtung vorgesehen ist. Des Weiteren kann so der Befestigungsvorsprung die Ausrichtung der Befestigung der Sensorvorrichtung an der Heizeinrichtung bestimmen, während die Rastmittel dafür sorgen können, dass sich diese Befestigung nicht so leicht löst.

Eine Halteaufnahme ist vorteilhaft als separates Teil ausgebildet und zwischen zwei Flächenteilen der Heizeinrichtung angeordnet bzw. befestigt, insbesondere dazwischen festgeklebt. Vorteilhaft kann dies auf der Ebene der vorgenannten Ferritstäbe sein. Dabei kann die Halteaufnahme mindestens eine Rastkammer aufweisen zum Einstecken des Befestigungsabschnitts bzw. des Befestigungsvorsprungs mit der vorgenannten Rastzunge, wobei dadurch die Ausrichtung festgelegt sein kann. In der Rastkammer ist bevorzugt ein Rastvorsprung als Teil der vorgenannten Rastmittel vorgesehen, und die Rastzunge rastet beim Einstecken hinter den Rastvorsprung ein als Rastverbindung bzw. zur Sicherung. Vorteilhaft kann die Rastkammer den Befestigungsvorsprung vollständig umgeben, insbesondere formgenau, wodurch die genannte sichere Ausrichtung erreicht werden kann.

Ein erfindungsgemäßes Kochfeld weist mehrere vorbeschriebene Heizeinrichtungen und mehrere vorbeschriebene Sensorvorrichtungen auf. Zwischen zwei Heizeinrichtungen ist genau eine einzige Sensorvorrichtung angeordnet bzw. vorgesehen, wobei diese Sensorvorrichtung an genau diesen beiden Heizeinrichtungen befestigt ist. Es kann für das Kochfeld vorgesehen sein, dass in jedem Zwischenbereich zwischen zwei benachbarten bzw. mit Längsseiten benachbarten Heizeinrichtungen eine solche Sensorvorrichtung vorgesehen ist, insbesondere genau eine einzige solche Sensorvorrichtung. Dabei können die Heizeinrichtungen vorteilhaft rechteckigen bzw. angenähert rechteckigen Umfang aufweisen, und die Längsseiten dieses Rechtecks sind die Außenseiten der Heizeinrichtung. Insbesondere werden sie bzw. die Außenkanten gebildet von den vorgenannten Flächenteilen der Heizeinrichtungen.

Weist das Kochfeld die Heizeinrichtungen in zwei rechtwinkligen Richtungen auf, also beispielsweise in einer Richtung mehr als zwei Heizeinrichtungen und in der dazu rechtwinkligen Richtung mindestens zwei Heizeinrichtungen, so kann eine entsprechende Anzahl von Sensorvorrichtungen vorgesehen sein. Wenn die Sensorvorrichtungen Temperatursensoren als Sensorelemente aufweisen, so kann damit eine Temperatur jeweils in einem Zwischenbereich zwischen zwei benachbarten Heizeinrichtungen ermittelt werden, insbesondere darüber. Eine Ermittlung der Temperatur im Wesentlichen mitten in der Fläche der Heizeinrichtung erfolgt vorteilhaft durch an sich bekannte Temperatursensoren im Flächenbereich bzw. im Mittelbereich der Heizeinrichtungen. Wie eingangs erläutert, kann vor allem bei Induktionsheizeinrichtungen ein hier üblicherweise vorgesehener mittiger Temperatursensor verwendet werden.

Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine vereinfachte Schnittdarstellung durch ein erfindungsgemäßes Kochfeld,
- Fig. 2: eine Draufsicht auf das Kochfeld aus Fig. 1 ohne Kochfeldplatte und mit Darstellung der erfindungsgemäßen Heizeinrichtungen,
- Fig. 3: eine Schrägdarstellung auf eine erfindungsgemäße Sensorvorrichtung, wie sie in dem Kochfeld der Fig. 1 und 2 eingebaut ist,
- Fig. 4: eine Draufsicht auf die Sensorvorrichtung aus Fig. 3,
- Fig. 5: eine Schrägansicht von oben auf eine erfindungsgemäße Heizeinrichtung entsprechend Fig. 2 mit einer daran angebrachten Sensorvorrichtung aus Fig. 3,
- Fig. 6: eine Schrägansicht von unten auf die Heizeinrichtung samt Sensorvorrichtung aus Fig. 5,
- Fig. 7: eine Schrägansicht von unten entsprechend Fig. 6 mit einer weiteren Heizeinrichtung, wobei die untersten Mikanitscheiben der Heizeinrichtungen weggelassen wurden,
- Fig. 8: eine Draufsicht auf die Anordnung der beiden Heizeinrichtungen aus Fig. 7 von oben,
- Fig. 9: eine Halteeinrichtung für eine Sensorvorrichtung ähnlich derjenigen aus Fig. 3, bei der nur an einer Seite ein Befestigungsabschnitt vorgesehen ist,
- Fig. 10: eine Schrägdarstellung von oben auf eine weitere Halteeinrichtung für eine Sensorvorrichtung, die an beiden Längsseiten Befestigungsabschnitte aufweist, die auf Mikanitscheiben zweier benachbarter Heizeinrichtungen aufgesteckt werden können,
- Fig. 11: eine Schrägdarstellung ähnlich Fig. 5 auf eine Anordnung einer Sensorvorrichtung mit einer Halteeinrichtung nach Fig. 10 zwischen den Heizeinrichtungen,
- Fig. 12: eine leicht schräge Schnittdarstellung durch die Anordnung aus Fig. 11
- Fig. 13: eine Schrägdarstellung ähnlich Fig. 3 auf eine alternative Halteeinrichtung für eine Sensorvorrichtung mit zwei abstehenden Befestigungsvorsprüngen samt Rastzungen,
- Fig. 14: eine Darstellung einer separaten Halteaufnahme für die Befestigungsvorsprünge,
- Fig. 15: eine Schrägansicht von oben auf eine weitere erfindungsgemäße Heizeinrichtung ähnlich Fig. 6 mit einer daran befestigten Halteaufnahme aus Fig. 14,
- Fig. 16: eine Schnittdarstellung durch die Heizeinrichtung aus Fig. 15, an der die Sensorvorrichtung aus Fig. 13 durch Einstecken in die Halteaufnahme befestigt ist, und
- Fig. 17: eine Schrägansicht auf die Heizeinrichtung aus Fig. 16.

### Detaillierte Beschreibung der Ausführungsbeispiele

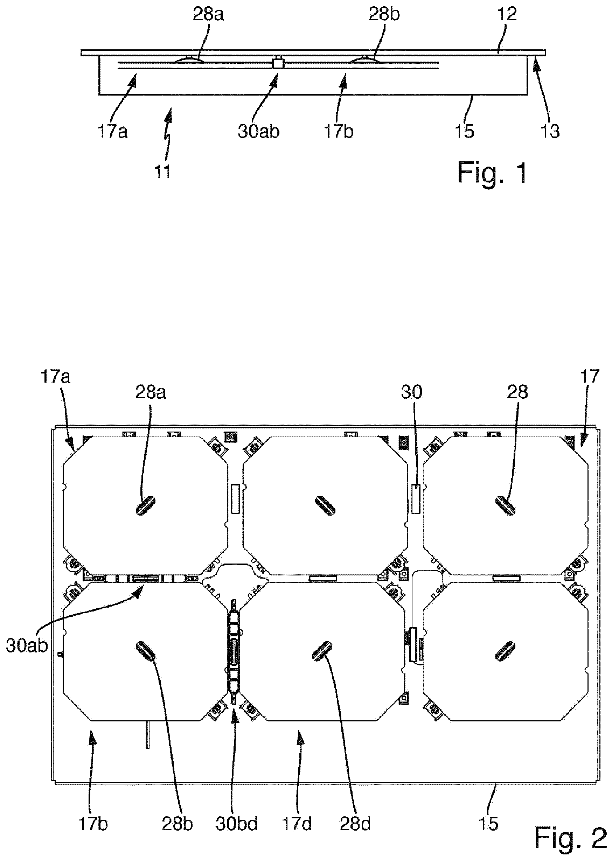

In der Fig. 1 ist ein erfindungsgemäßes Kochfeld 11 in seitlicher Schnittdarstellung gezeigt, hier von der linken Seite aus gesehen. Das Kochfeld 11 weist eine Kochfeldplatte 12 mit einer Kochfeldplattenunterseite 13 auf. Unter der Kochfeldplatte 12 ist ein Gehäuse 15 angeordnet, das wie üblich ausgebildet sein kann und die üblichen Funktionseinrichtungen des Kochfelds 11 enthält. Dargestellt sind zwei Heizeinrichtungen 17a und 17b, die für eine induktive Beheizung ausgebildet sind, wie nachfolgend noch näher gezeigt wird. Sie sind jeweils federnd an die Kochfeldplattenunterseite 13 angedrückt. Oben an den Heizeinrichtungen 17a und 17b ist jeweils ein Zusatz-Temperatursensor 28a und 28b angeordnet, und sie liegen direkt an der Kochfeldplattenunterseite 13 an. Deren Zweck bzw. Verwendung ist dem Fachmann bekannt. Zwischen den beiden Heizeinrichtungen 17a und 17b ist eine erfindungsgemäße Sensorvorrichtung 30ab angeordnet, die an diesen beiden befestigt ist. Zusammen mit diesen ist sie ebenfalls an die Kochfeldplattenunterseite 13 angedrückt und dient zur Erfassung der Temperatur der Kochfeldplatte 12. Diese Temperatur wird möglicherweise durch darüber aufgestellte Kochgefäße beeinflusst, die über beiden Heizeinrichtungen 17a und 17b aufgestellt sind, beispielsweise sehr große Kochtöpfe oder Bräter. Aufgrund der dann höheren Temperatur über und an der Sensorvorrichtung 30ab kann das Vorhandensein eines Kochgefäßes darüber bestätigt bzw. verifiziert werden. Diese Funktionen der erfindungsgemäßen Sensorvorrichtung zur Temperaturerfassung sind dem Fachmann aber bekannt und brauchen hier nicht näher erläutert zu werden.

In der Fig. 2 ist eine Draufsicht dargestellt, die sozusagen das Kochfeld aus Fig. 1 von oben zeigt, allerdings mit abgenommener Kochfeldplatte 12, um die Anordnung darunter erkennen zu können. In dem Gehäuse 15 sind sechs Heizeinrichtungen 17 angeordnet, insbesondere die näher bezeichneten Heizeinrichtungen 17a, 17b und 17d. Auf diesen Heizeinrichtungen ist jeweils ein zuvor genannter Zusatz-Temperatursensor 28a, 28b bzw. 28d angeordnet, und zwar relativ mittig. Bezüglich des daran angeordneten Sensorelements können diese Zusatz-Temperatursensoren 28 denjenigen der Sensorvorrichtungen 30 entsprechen, lediglich ihre Halterung ist etwas anders. Zwischen den beiden Heizeinrichtungen 17a und 17b ist genau eine einzige Sensorvorrichtung 30ab angeordnet, und zwar im Wesentlichen in dem schmalen Zwischenraum dazwischen. Sie ist dabei in etwa in der Mitte der Längsseite vorgesehen. Zwischen den beiden Heizeinrichtungen 17b und 17d ist eine entsprechende Sensorvorrichtung 30bd vorgesehen, wiederum als einzige dazwischen angeordnete Sensorvorrichtung. Wie angedeutet dargestellt ist, sind weitere solcher Sensorvorrichtungen, insbesondere mit identischer Ausbildung, zwischen allen jeweils direkt benachbarten Heizeinrichtungen 17 vorgesehen, und zwar jeweils in dem Bereich, in dem sie mit ihren Längsseiten parallel und benachbart zueinander liegen. So kann in diesen Zwischenbereichen sowohl eine entsprechende Temperatur an der Kochfeldplatte 12 erfasst werden als auch beispielsweise dadurch das Vorhandensein eines beheizten Kochtopfs.

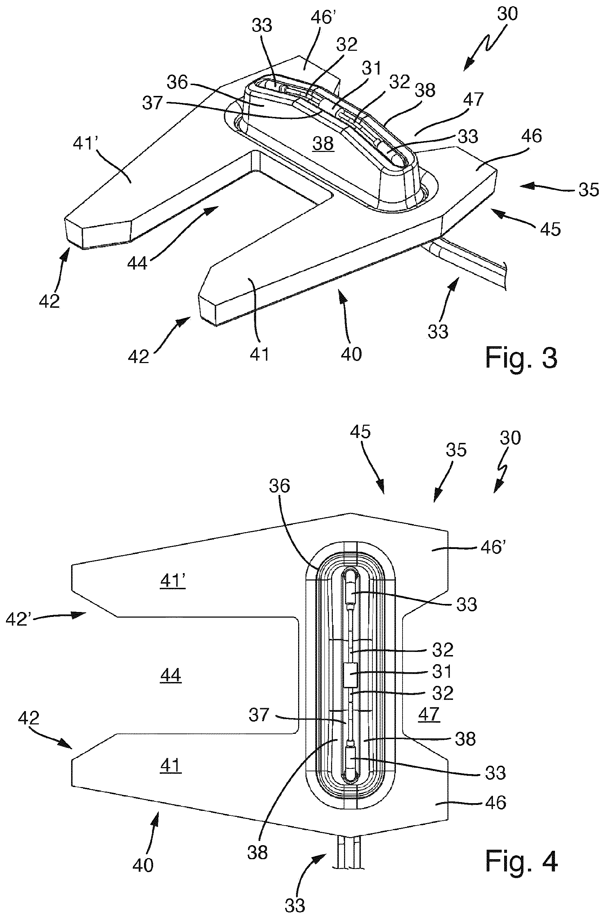

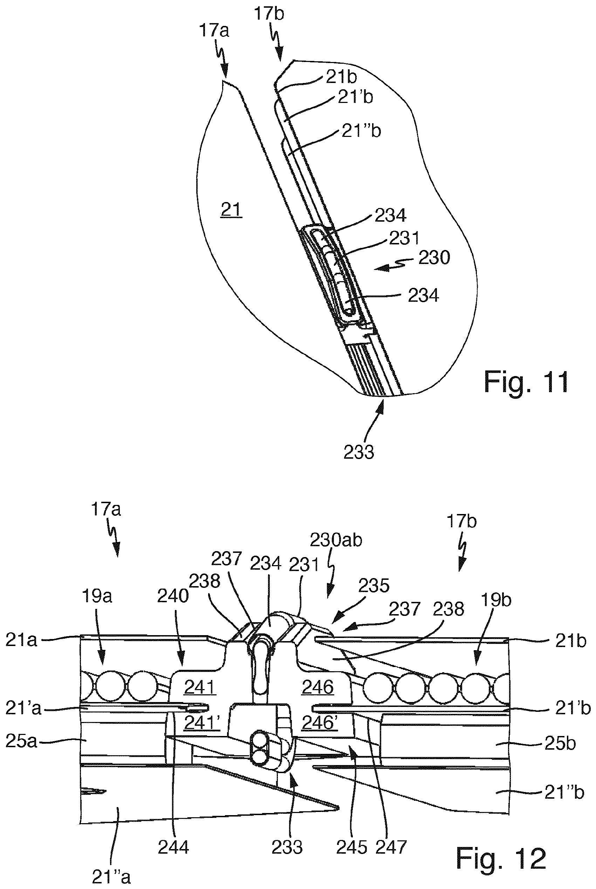

In der Fig. 3 ist eine Schrägdarstellung einer erfindungsgemäßen Sensorvorrichtung 30 in einer ersten Ausgestaltung dargestellt und in der Fig. 4 von oben. Die Sensorvorrichtung 30 weist eine Halteeinrichtung 35 für einen Temperatursensor 31 auf, wobei der Temperatursensor 31 daran so angeordnet ist, dass er, wie beispielsweise aus Fig. 12 gut vorstellbar ist, deren höchsten Punkt bildet. So kann sichergestellt werden, dass der Temperatursensor 31 auch tatsächlich entsprechend der Fig. 1 auf alle Fälle an der Kochfeldplattenunterseite 13 anliegt. Wenn noch weitere Teile, insbesondere der Heizeinrichtungen 17, wie beispielsweise die Zusatz-Temperatursensoren 28, an der Kochfeldplattenunterseite 13 anliegen würden, so wäre dies kein Problem. Auf alle Fälle muss aber dieser Temperatursensor 31 daran anliegen.

Der Temperatursensor 31 weist auf beiden Seiten Sensoranschlüsse 32 auf, hier ausgebildet als abstehende Drähte. Somit kann der Temperatursensor 31 nach Art eines THT-Bauteils oder als THT-Bauteil ausgebildet sein, was eine große Auswahl und geringe Kosten sicherstellt. Die Sensoranschlüsse 32 sind jeweils mit einem Anschlusskabel 33 verbunden. Die Anschlusskabel 33 gehen jeweils durch die Halteeinrichtung 35 hindurch nach unten und sind seitlich nebeneinander weggeführt, hier nach rechts bzw. nach unten. Dies ist auch aus der Draufsicht der Fig. 4 gut zu erkennen. Die in den Fig. 3 und 4 freiliegenden Sensoranschlüsse 32 und deren Verbindung mit den Anschlusskabeln 35 können in der Praxis natürlich noch einmal elektrisch isoliert sein, beispielsweise durch dünne übergestreifte Schläuche, beispielsweise aus Silikon, Teflon oder Glasfasergewebe. Dies ist an sich aus dem Stand der Technik bekannt und wird weiter hinten in den Fig. 11 und 12 auch dargestellt.

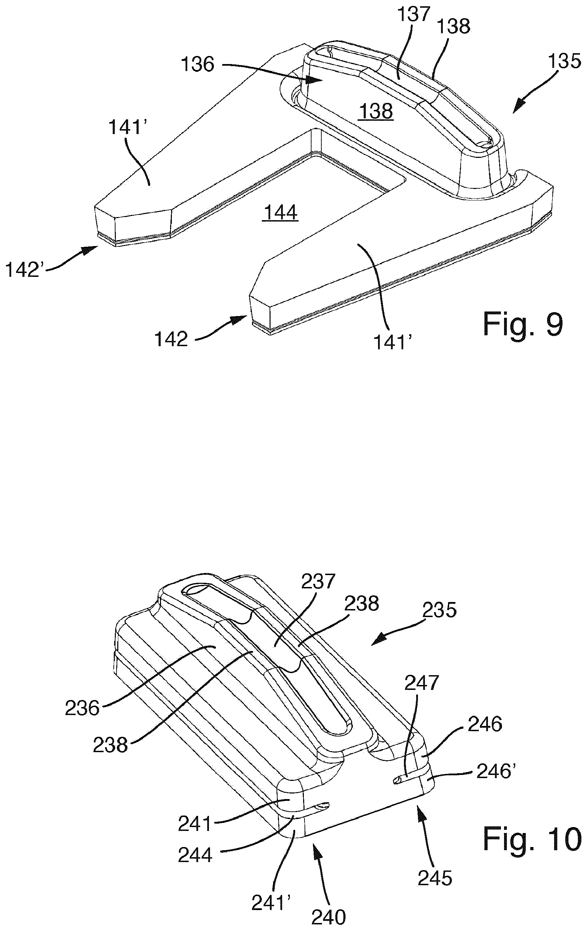

Die Halteeinrichtung 35 für den Temperatursensor 31 besteht einerseits aus einem Haltebereich 36, der als erhabener Bereich ausgebildet ist. Der Haltebereich 36 weist oben eine Sensorelementaufnahme 37 auf, die zwei parallele Wandungen 38 aufweist, welche zwischen sich eine wannenartige Aufnahme für den Temperatursensor 31 bilden. So ist die Sensorelementaufnahme 37 wie eine Wanne ausgebildet. Diesbezüglich wird auch noch auf die Fig. 9 und 10 verwiesen, deren alternativ ausgebildete Halteeinrichtungen aber identisch ausgebildete Haltebereiche zeigen. Durch den Abstand der beiden Wandungen 38 zueinander ist der Temperatursensor 31 lagegenau zwischen sich gehalten, kann also nicht hin- und herbewegt werden. So bildet er sicher den höchsten Punkt der Sensorvorrichtung 30. Gegen eine Bewegung in seiner Längsrichtung wird der Temperatursensor 31 im Wesentlichen durch die Führung der Anschlusskabel 33 gesichert. Diese Anschlusskabel 33 sind zwar einfach nur durch den Haltebereich 36 geführt und brauchen nicht zusätzlich befestigt zu werden, beispielsweise geklemmt oder geklebt. Deren erkennbares mehrfaches Abwinkeln befestigt sie jedoch bzw. verhindert jegliches Verschieben.

Der beschriebene Haltebereich 36 ist an einem Befestigungsabschnitt 40 angeordnet bzw. mit einem solchen verbunden. Der Befestigungsabschnitt 40 weist zwei Befestigungsvorsprünge 41 und 41' auf, die nach links vorne weisen und länglich sind und jeweils in der Breite verjüngte Enden 42 und 42' aufweisen. Diese verjüngten Enden 42 und 42' dienen zum erleichterten Einführen, was nachfolgend noch näher erläutert wird. Die Befestigungsvorsprünge 41 und 41' können auch in ihrer Dicke zu den verjüngenden Enden 42 und 42' hin dünner werden, um auch diesbezüglich nochmals leichter eingeführt zu werden.

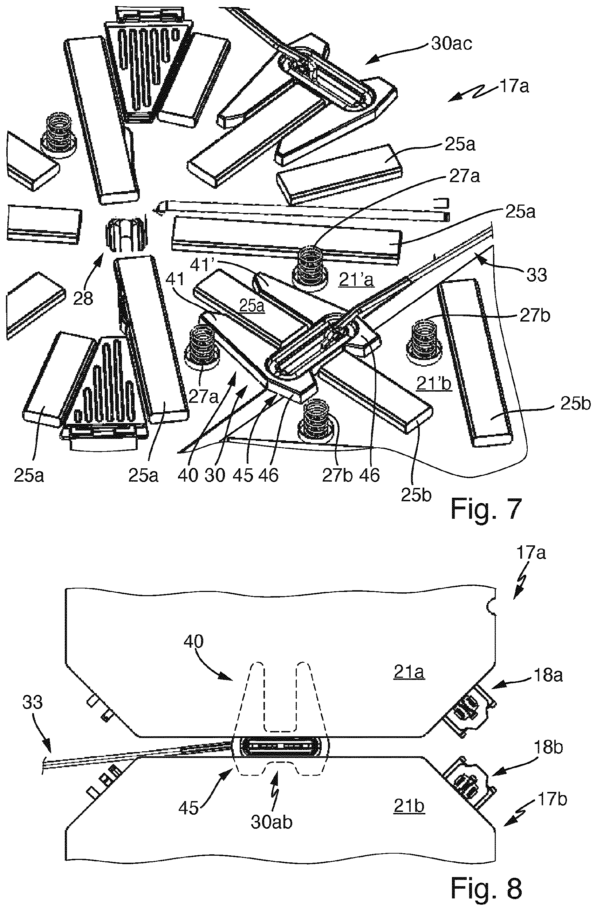

Die abstehenden Befestigungsvorsprünge 41 und 41' weisen zwischen sich eine Befestigungsausnehmung 44 auf, die rechteckig ausgebildet ist, insbesondere durch die parallelen Innenseiten der Befestigungsvorsprünge. Damit kann die Halteeinrichtung 35 und somit die gesamte Sensorvorrichtung 30 auf einen Ferritstab aufgeschoben werden, wie zu der Fig. 7 näher erläutert wird.

Auf der gegenüberliegenden Längsseite des Haltebereichs 36 ist ein weiterer Befestigungsabschnitt 45 vorgesehen, der vorteilhaft in derselben Ebene und mit derselben Dicke wie der Befestigungsabschnitt 40 ausgebildet ist. Dieser Befestigungsabschnitt 45 weist zwei deutlich kürzere Befestigungsvorsprünge 46 und 46' auf, die zwischen sich eine deutlich kürzere Befestigungsausnehmung 47 aufweisen. Wie später aus der Fig. 7 deutlich wird, kann auch diese Befestigungsausnehmung 47 einen Ferritstab übergreifen, allerdings deutlich geringere Passgenauigkeit bieten. Dies stellt aber kein Problem dar, da die Haltewirkung vor allem durch den Befestigungsabschnitt 40 gegeben ist. Hergestellt werden kann eine solche Sensorvorrichtung 30 bzw. Halteeinrichtung 35 aus Kunststoff, insbesondere ausreichend temperaturbeständigem Kunststoff. Dies kann möglicherweise ein relativ weicher bzw. elastischer Kunststoff sein wie eingangs erläutert worden ist.

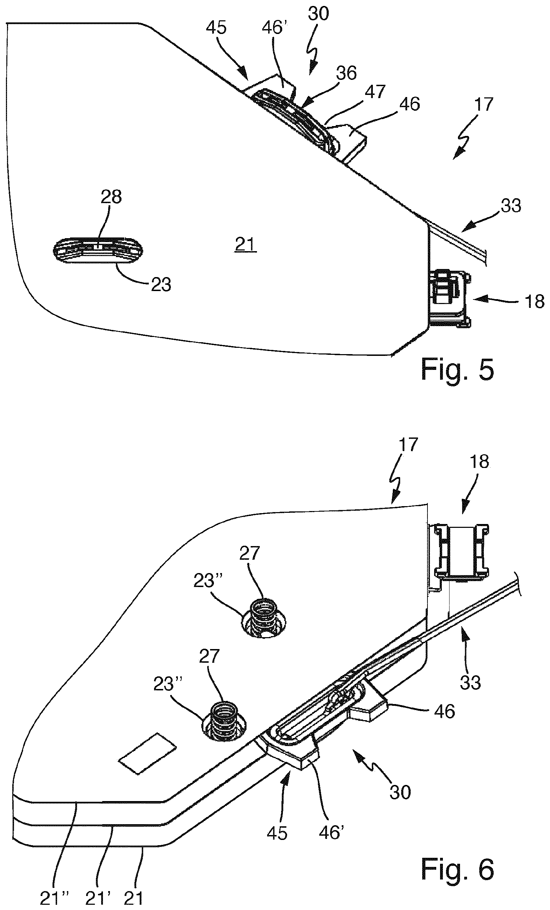

Aus den Fig. 5 und 6 ist in einer Schrägansicht von oben und in einer Schrägansicht von unten dargestellt, wie eine Sensorvorrichtung 30 aus den Fig. 3 und 4 seitlich in eine Heizeinrichtung 17 eingesteckt ist. Zu der Heizeinrichtung 17 ist zu sagen, auch im Vorgriff auf die Fig. 12, die identische Heizeinrichtungen 17 zeigt, dass eine Induktionsheizspule 19a bzw. 19b auf bekannte Art und Weise in einer Ebene spiralig aus dicker Induktionslitze gewickelt ist. Diese Induktionsheizspule 19a bzw. 19b ist zwischen zwei Mikanitscheiben 21a und 21'a bzw. 21b und 21'b angeordnet, wobei hier durchaus etwas mehr Abstand als die Höhe der Induktionsheizspule 19 vorgesehen sein kann, siehe Fig. 12. Auf der Unterseite der Mikanitscheiben 21'a und 21'b sind in dem Muster der Fig. 7 mehrere unterschiedlich lange Ferritstäbe 25a bzw. 25b angeordnet, insbesondere festgeklebt. Diese Ferritstäbe 25a und 25b sind sämtlich jeweils gleich dick, insbesondere jeweils auch gleich breit, aber unterschiedlich lang. Sie sind im Wesentlichen in radialer Richtung ausgerichtet und weisen auf einen Mittelpunkt jeder Heizeinrichtung 17a und 17b hin, an dem ein zuvor bereits erläuterter Zusatz-Temperatursensor 28 angeordnet ist. Des Weiteren sind an der Unterseite der Mikanitscheiben 21'a und 21'b Schraubenfedern 27a bzw. 27b angeordnet, vorteilhaft in speziell ausgebildeten Halterungen. Diese können gemäß der Fig. 6 durch entsprechende Ausnehmungen 23" in einer dritten, untersten Mikanitscheibe 21"a und 21"b hindurchstehen. Sie können auf einer Zwischenebene in dem Gehäuse 15 aus Fig. 1 aufliegen und die jeweilige Heizeinrichtung 17 elastisch nach oben gegen die Kochfeldplattenunterseite 13 drücken. In der obersten Mikanitscheibe 21 gemäß Fig. 5 ist auch eine Ausnehmung 23 für den Zusatz-Temperatursensor 28 zu erkennen. Somit steht dieser nach oben über, kann aber eine Halteeinrichtung aufweisen, die beispielsweise ähnlich ausgebildet ist wie die beschriebenen Halteeinrichtungen 35 und zwischen zwei Mikanitscheiben 21 angeordnet und befestigt ist.

Wie aus dem Vergleich der Fig. 6 und 7 miteinander gut zu ersehen ist, greift eine Halteeinrichtung 35 der Sensorvorrichtungen 30ab und 30ac jeweils zwischen die mittlere Mikanitscheibe 21'a und 21'b und eine unterste Mikanitscheibe 21". Die beiden langen Befestigungsvorsprünge 41 und 41' verlaufen dabei außen parallel zu den Ferritstäben 25a, die sie übergreifen. Dadurch sind sie gegen ein Verschieben oder Verdrehen in der Ebene parallel zu den Mikanitscheiben gesichert. Da Ferritstäbe 25b der jeweils anderen Heizeinrichtung 17b von der anderen Seite in die Befestigungsausnehmung 47 des Befestigungsabschnitts 45 greifen, ist auch eine Bewegung in Längsrichtung weg von dem jeweiligen Ferritstab 25 verhindert. Des Weiteren ist durch die Anordnung der Befestigungsvorsprünge 41 und 46 zwischen der mittleren und der untersten Mikanitscheibe eine Halterung in vertikaler Richtung gewährleistet und gesichert, wodurch ein Andrücken der Temperatursensoren 31 an die Kochfeldplattenunterseite 13 gewährleistet ist.

Aus der Draufsicht der Fig. 8 ist gut zu erkennen, dass die Sensorvorrichtung 30ab mit dem Haltebereich 36 zwischen den Heizeinrichtungen 17a und 17b bzw. deren obersten Mikanitscheiben 21a und 21b angeordnet ist. Deren Rand kann dann an den Wandungen 38 des Haltebereichs 36 anliegen. Gestrichelt dargestellt sind die Befestigungsabschnitte 40 und 45, die zwischen die mittlere und unterste Mikanitscheibe eingreifen und so die Sensorvorrichtung 30ab sichern. Dort übergreifen die jeweiligen Befestigungsvorsprünge der Befestigungsabschnitte 40 und 45 nicht dargestellte Ferritstäbe und sorgen für eine positionsgetreue Befestigung, wie zuvor erläutert worden ist. Für die Montage eines Kochfelds 11 kann vorgesehen sein, dass zuerst beispielsweise die Heizeinrichtung 17a auf einer Zwischenebene im Gehäuse 15 aufgesetzt wird und mit an den Ecken vorgesehenen Halterungen 18a befestigt wird. Dann kann die Sensorvorrichtung 30ab daran befestigt werden durch Einschieben des Befestigungsabschnitts 40 in die Heizeinrichtung 17a. Mittels der Anschlusskabel 33 kann der elektrische Anschluss erfolgen. Dann kann die Heizeinrichtung 17b positioniert werden und dabei sozusagen auf den kurzen Befestigungsabschnitt 45 aufgeschoben werden. Sie wird dann mittels der Halterung 18b befestigt. Im nächsten Schritt kann an die nach rechts weisenden Seiten der Heizeinrichtungen 17a und 17b jeweils eine weitere Sensorvorrichtung 30 eingeschoben werden, und so weiter.

In der Fig. 9 ist in einer Schrägdarstellung ähnlich der Fig. 3 eine Halteeinrichtung 135 für eine weitere Sensorvorrichtung dargestellt, allerdings ohne Temperatursensor samt elektrischen Anschlüssen. Diese Halteeinrichtung 135 ist im Wesentlichen ausgebildet wie diejenige aus Fig. 3, sie weist also einen nach oben erhabenen Haltebereich 136 auf mit zwei Wandungen 138, die zwischen sich eine wannenartige Sensorelementaufnahme 137 bilden. Diese ist auch wieder bogenartig ausgebildet, wodurch sichergestellt wird, dass im mittleren Bereich, wo gemäß Fig. 3 der Temperatursensor angeordnet ist, tatsächlich der höchste Punkt erreicht wird. Der Haltebereich 136 ist mit einem Befestigungsabschnitt 140 verbunden, der in die Heizeinrichtung absteht. Der Befestigungsabschnitt 140 weist zwei Befestigungsvorsprünge 141 und 141' auf, die jeweils verjüngte Enden 142 und 142' aufweisen. Dazwischen ist eine rechteckige Befestigungsausnehmung 144 gebildet, die zum Aufschieben auf einen Ferritstab ausgebildet ist. Anders als bei der Halteeinrichtung 35 der Fig. 3 ist aber nur ein einziger Befestigungsabschnitt 140 zu einer Seite hin vorgesehen. Eine solche Halteeinrichtung 135 kann also für eine Sensorvorrichtung vorgesehen sein, die entweder nicht an einer auf der anderen Seite benachbarten Heizeinrichtung befestigt sein soll, insbesondere durch Eingriff wie zuvor erläutert. Alternativ kann sie an einem nach außen weisenden Rand einer Heizeinrichtung angeordnet werden, so dass nach außen hin gar kein Platz für einen weiteren Befestigungsabschnitt wäre. Dies soll veranschaulichen, dass es die eingangs erläuterten Varianten gibt, wie eine solche Halteeinrichtung bzw. wie eine solche Sensorvorrichtung ausgebildet sein kann, insbesondere bezüglich der Möglichkeiten zu ihrer Befestigung.

In der Fig. 10 ist eine nochmals weitere Halteeinrichtung 235 für eine entsprechende Sensorvorrichtung dargestellt, ähnlich wie in Fig. 9 wiederum ohne Temperatursensor. Allerdings ist auch hier der obere Bereich eines Haltebereichs 236 mit den beiden parallelen Wandungen 238, die zwischen sich eine gebogene wannenartige Sensorelementaufnahme 237 bilden, gleich ausgebildet. Somit kann auch hier derselbe Temperatursensor auf dieselbe Art und Weise angeordnet werden wie in Fig. 3, was leicht vorstellbar ist. Diese Halteeinrichtung 235 entspricht der eingangs erläuterten zweiten grundsätzlichen Ausgestaltung der Erfindung. Der Haltebereich 236 ist nämlich mit zwei links und rechts spiegelbildlich gleich ausgebildeten Befestigungsabschnitten 240 und 245 versehen. Diese bestehen aus einem oberen Befestigungsvorsprung 241 bzw. 246 und einem unteren Befestigungsvorsprung 241' bzw. 246'. Die beiden parallel zueinander geführten Befestigungsvorsprünge bilden jeweils Befestigungsausnehmungen 244 bzw. 247 zwischen sich. Diese Befestigungsausnehmungen 244 und 247 weisen gleiche Höhe auf, zur Längsseite hin können sie möglicherweise etwas angefast oder aufgeweitet sein. Hier sollen nämlich die Randabschnitte von Mikanitscheiben eingesteckt werden, und dann ist ein Einführen erleichtert. Aus der Darstellung der weiteren Fig. 11 und 12 ist ersichtlich, wie die komplett mit Temperatursensor 231 bestückte Sensorvorrichtung 230ab mit einer Halteeinrichtung 235ab entsprechend der Fig. 10 zwischen zwei benachbarten Heizeinrichtungen 17a und 17b angeordnet ist, die ausgebildet sind wie zuvor beschrieben. Die zueinander weisenden Randbereiche bzw. Kanten der mittleren Mikanitscheiben 21'a und 21'b sind jeweils in die Befestigungsausnehmungen 244 und 247 eingesteckt, insbesondere bis an einen Anschlag, um so die Sensorvorrichtung 230ab sicher zu halten. Der Halteberich 236 verläuft dabei zwischen den beiden Heizeinrichtungen 17a und 17b, insbesondere zwischen deren oberen Mikanitscheiben 21a und 21b, und steht nach oben über sie über. Aus der Fig. 12 ist zu erkennen, dass am höchsten Punkt der Temperatursensor 231 angeordnet ist. Seine elektrischen Anschlüsse sowie der Beginn der Anschlusskabel 233 können mit Schläuchen 234 überzogen sein zur elektrischen Isolierung. Aus der Schnittdarstellung der Fig. 12 ist auch zu erkennen, dass die oberen Befestigungsvorsprünge 241 bzw. 246 zwischen die oberen und die mittleren Mikanitscheiben eingreifen. Ebenso greifen die unteren Befestigungsvorsprünge 241' und 246' zwischen die mittleren und die unteren Mikanitscheiben 21"a und 21"b ein, ähnlich wie dies zuvor für die anderen Befestigungsvorsprünge der anders ausgebildeten Sensorvorrichtungen bzw. deren Halteeinrichtungen beschrieben worden ist. Allerdings weisen sie keine Halterung an den dargestellten Ferritstäben 25a und 25b auf. Ähnlich wie zuvor beschrieben können auch diese Sensorvorrichtungen 230ab bei sukzessiver Montage des Kochfelds mit einer Heizeinrichtung 17 nach der anderen seitlich in diese eingesteckt bzw. aufgesteckt werden. Die Befestigungswirkung entsteht allerdings weniger durch dieses Einstecken als dadurch, dass die Befestigungsvorsprünge jedes Befestigungsabschnitts den Randbereich der mittleren Mikanitscheibe fest zwischen sich einklemmen.

Gegen ein Verschieben der Sensorvorrichtung 230ab in Längsrichtung kann entweder die kraftschlüssige Klemmung auf den mittleren Mikanitscheiben dienen. Alternativ könnte wiederum von den unteren Befestigungsvorsprüngen ein längerer Abschnitt hervorstehen, ähnlich wie in den Fig. 7 gezeigt, und sozusagen an einem Ferritstab 25 fixiert sein. In einer nochmals weiteren Ausgestaltung können auch an der Kante einer mittleren Mikanitscheibe 21' oder beider mittlerer Mikanitscheiben 21' ein Vorsprung oder eine Ausnehmung vorgesehen sein, die entsprechend mit einem Vorsprung oder einer Ausnehmung in den Befestigungsabschnitten der Halteeinrichtung 235 zusammenwirken gegen ein Verschieben.

Durch die längliche Ausgestaltung des Haltebereichs 236 ist die Längsanordnung des Temperatursensors gut möglich, ebenso können dessen Sensoranschlüsse und die damit verbundenen Anschlusskabel gut geführt werden. Der zwischen zwei benachbarten Heizeinrichtungen vorgesehene Platz wird gut genutzt, es wird kein zusätzlicher Platz benötigt, sie müssen also keinen größeren Abstand aufweisen. Für die mittig auf den Heizeinrichtungen 17 vorgesehenen Zusatz-Temperatursensoren können ähnliche Haltebereiche und ähnlich ausgebildete Temperatursensoren vorgesehen sein, allerdings möglicherweise andere bzw. einfacher und vor allem kleiner ausgebildete Halteeinrichtungen.

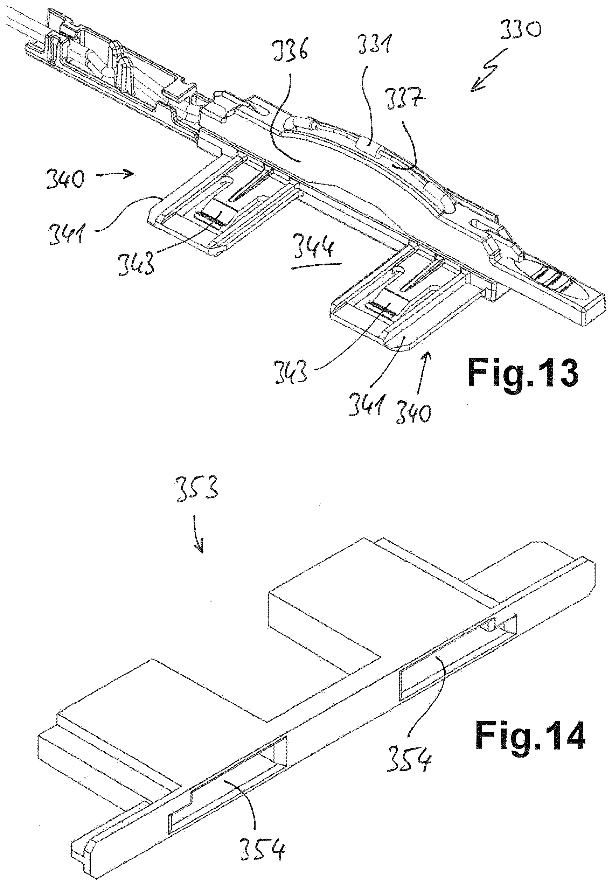

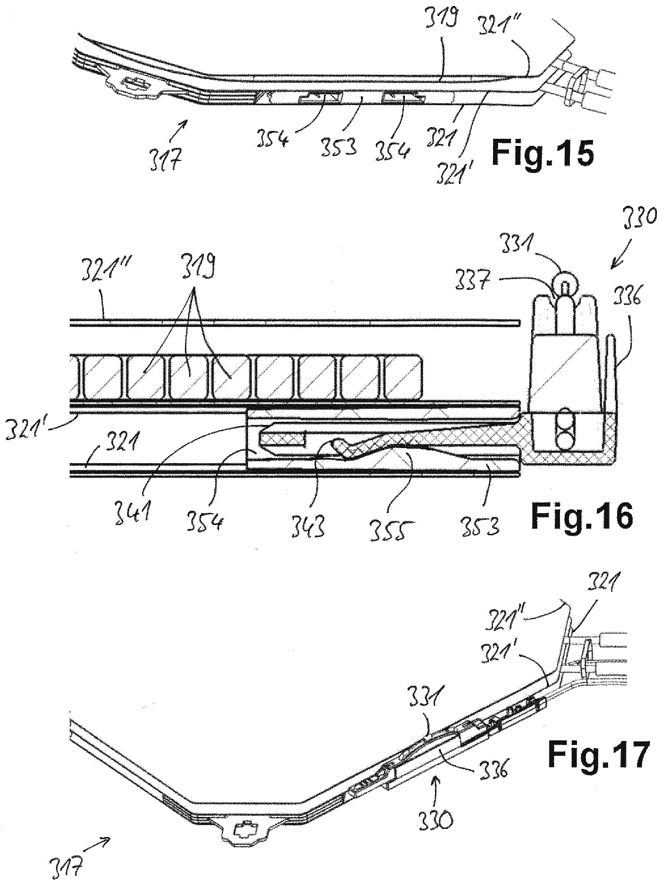

In der Fig. 13 ist eine weitere Ausgestaltung einer erfindungsgemäßen Sensorvorrichtung 330 dargestellt, die im Vergleich zu derjenigen aus Fig. 3 länger ist und einen längeren Haltebereich 336 aufweist, der an einer nach oben gewölbten Sensorelementaufnahme 337 einen Temperatursensor 331 trägt. Von dem Haltebereich 336 stehen zwei Befestigungsabschnitte 340 rechtwinklig zur Seite ab, die zwischen sich eine Befestigungsausnehmung 344 bilden. Die Befestigungsabschnitte 340 werden jeweils von Befestigungsvorsprüngen 341 gebildet, die ein spezifisches Profil aufweisen. Innerhalb der Befestigungsvorsprünge 341 ist jeweils eine Rastzunge 343 ausgebildet, deren Querschnitt in etwa aus der Darstellung der Fig. 16 zu ersehen ist. Während die beiden Befestigungsvorsprünge 341 spiegelsymmetrisch zueinander ausgebildet sind, sind die beiden Rastzungen 343 identisch ausgebildet.

In der Fig. 14 ist eine Halteaufnahme 353 für die Befestigungsvorsprünge 341 als separates Kunststoffteil dargestellt. Die Halteaufnahme 353 weist zwei Rastkammern 354 auf, welche in einem Abstand entsprechend den Befestigungsabschnitten 340 der Sensorvorrichtung 330 angeordnet sind. In einen zwischen den Rastkammern 354 gebildeten Zwischenraum kann entsprechend Fig. 7 ein Ferritstab 25a reichen. Die Rastkammern 354 weisen im Inneren gemäß der Schnittdarstellung der Fig. 16 unten einen Rastvorsprung 355 auf, hinter den das vordere Ende einer Rastzunge 343 greift für die Rastverbindung. Dadurch wird gemäß Fig. 16 verhindert, dass die Sensorvorrichtung 331 von der Heizeinrichtung 317 wieder leicht entfernt werden kann oder sich sogar von selbst entfernt.

Wie auch die Schrägdarstellungen der Fig. 15 und 17 zeigen, ist die Halteaufnahme 353 dabei zwischen die beiden unteren Mikanitscheiben 321 und 321' eingeschoben und vorteilhaft darin festgeklebt. So kann die Halteaufnahme 353 bei Herstellung der Heizeinrichtung 317 daran befestigt bzw. festgeklebt werden. Eine Anordnung bzw. Montage der Sensorvorrichtung 330 an der Heizeinrichtung 317 kann dann noch leichter, sicherer und passgenauer vorgenommen werden, sie muss nur mit den Befestigungsvorsprüngen 341 in die Halteaufnahme 353 eingesteckt werden. Des Weiteren verbleibt die Sensorvorrichtung 330 dann in genau festgelegter Position an der Heizeinrichtung 317, bis diese gemäß Fig. 2 mit mehreren weiteren Heizeinrichtungen 317 in ein Kochfeld eingebaut wird.

## Patentansprüche

1. Sensorvorrichtung (30, 230, 330) für ein Kochfeld (11), wobei die Sensorvorrichtung (30, 230, 330) aufweist:
- ein Sensorelement (31, 231, 331), das elektrische Anschlüsse (32, 33, 233) aufweist, vorzugsweise Kabel (33, 233) als elektrische Anschlüsse,
- eine Halteeinrichtung (35, 135, 235) für das Sensorelement (31, 231, 331),
wobei:
- die Halteeinrichtung (35, 135, 235) einen oberen Haltebereich (36, 136, 236, 336) aufweist, in dem das Sensorelement (31, 231, 331) positionsgenau derart gehaltert ist, dass es über die Halteeinrichtung (35, 135, 235) übersteht,
- der Haltebereich (36, 136, 236, 336) länglich ist und eine Länge aufweist, die mindestens 200% seiner Breite beträgt,
- die Halteeinrichtung (35, 135, 235) einen Befestigungsabschnitt (40, 45, 140, 240, 245, 340) aufweist, der mit dem Haltebereich (36, 136, 236, 336) verbunden ist,
- der mindestens eine Befestigungsabschnitt (40, 45, 140, 240, 245, 340) in einer Richtung etwa rechtwinklig von einer Längsrichtung des Haltebereichs (36, 136, 236, 336) absteht,
**dadurch gekennzeichnet, dass**
- der Befestigungsabschnitt (40, 45, 140, 240, 245, 340) Befestigungsvorsprünge (41, 41', 46, 46', 141, 141', 241, 241', 246, 246', 341) und Befestigungsausnehmungen (44, 47, 144, 244, 247, 344) aufweist für eine formschlüssige Befestigung der Sensorvorrichtung (30, 230, 330) im Außenbereich einer Heizeinrichtung (17) des Kochfelds (11) derart, dass mindestens ein Befestigungsvorsprung (41, 41', 46, 46', 141, 141', 241, 241', 246, 246', 341) seitlich absteht zum Eingriff in die Heizeinrichtung (17) zur Befestigung an der Heizeinrichtung (17).

2. Sensorvorrichtung nach Anspruch 1, **dadurch gekennzeichnet, dass** der mindestens eine Befestigungsabschnitt (40, 45, 140, 240, 245, 340) in einer Richtung zwischen 80° und 100° von einer Längsrichtung des Haltebereichs (36, 136, 236, 336) absteht.

3. Sensorvorrichtung nach Anspruch 1 oder 2, **dadurch gekennzeichnet, dass** die Halteeinrichtung (35, 135, 235) im Haltebereich (36, 136, 236, 336) eine wannenartige längliche Sensorelementaufnahme (37, 137, 237, 337) aufweist und das Sensorelement (31, 231, 331) innerhalb der Sensorelementaufnahme (37, 137, 237, 337) angeordnet ist, wobei vorzugsweise die Sensorelementaufnahme (37, 137, 237, 337) zumindest in Richtung parallel zu ihrer Längsrichtung je eine Wandung (38, 138, 238) auf jeder Seite des Sensorelements (31, 231, 331) aufweist, wobei die beiden Wandungen (38, 138, 238) mindestens 20% bis 50% unterhalb des höchsten Punkts des Sensorelements (31, 231, 331) bleiben.

4. Sensorvorrichtung nach einem der vorhergehenden Ansprüche, **dadurch gekennzeichnet, dass** der Befestigungsabschnitt (40, 45, 140, 340) mindestens so lang ist wie die halbe Länge des Haltebereichs (36, 136, 336) in Längsrichtung, wobei vorzugsweise der Befestigungsabschnitt (40, 45, 140, 340) flach ist, insbesondere gleichbleibende Dicke aufweist.

5. Sensorvorrichtung nach einem der vorhergehenden Ansprüche, **dadurch gekennzeichnet, dass** der Befestigungsabschnitt (40, 45, 140, 340) zwei Befestigungsvorsprünge (41, 41', 46, 46', 141, 141', 341) aufweist mit einer Befestigungsausnehmung (44, 47, 144, 344) dazwischen, wobei die Befestigungsausnehmung (44, 47, 144, 344) zwei gegenüberliegende parallele Seiten aufweist, insbesondere insgesamt Rechteckform aufweist bzw. definiert, wobei die jeweils gegenüberliegenden Seiten jeweils eine Seite der Befestigungsvorsprünge (41, 41', 46, 46', 141, 141', 341) bilden.

6. Sensorvorrichtung nach einem der vorhergehenden Ansprüche, **dadurch gekennzeichnet, dass** von gegenüberliegenden Seiten der Halteeinrichtung (35, 235) Befestigungsabschnitte (40, 45, 240, 245) in entgegengesetzten Richtungen abstehen, wobei insbesondere die Befestigungsabschnitte (40, 45, 240, 245) identisch bzw. spiegelbildlich ausgebildet sind.

7. Sensorvorrichtung nach einem der Ansprüche 1 bis 3, **dadurch gekennzeichnet, dass** ein Befestigungsabschnitt (240, 245) kürzer ist als die halbe Länge des Haltebereichs (236) in seiner Längsrichtung, vorzugsweise kürzer ist als 25% der Länge des Haltebereichs (236), wobei oben und unten am Befestigungsabschnitt (240, 245) parallel zum Haltebereich (236) ein oberer Randabschnitt (241, 246) und ein unterer Randabschnitt (241', 246') als Befestigungsvorsprünge (241, 241', 246, 246') verlaufen mit jeweils einer Befestigungsausnehmung (244, 247) gleichbleibender Höhe dazwischen.

8. Sensorvorrichtung nach Anspruch 7, **dadurch gekennzeichnet, dass** entlang beider Seiten des Haltebereichs (236) dieselben Befestigungsvorsprünge (241, 241', 246, 246') und Befestigungsausnehmungen (244, 247) vorgesehen sind, wobei die Befestigungsabschnitte (240, 245) in entgegengesetzten Richtungen abstehen, wobei insbesondere die Befestigungsabschnitte (240, 245) identisch bzw. spiegelbildlich ausgebildet sind.

9. Sensorvorrichtung nach einem der vorhergehenden Ansprüche, **dadurch gekennzeichnet, dass** mindestens ein Befestigungsvorsprung (341) Rastmittel (343) aufweist für eine Befestigung an einer Heizeinrichtung (17) mittels Rasten, wobei vorzugsweise die Rastmittel eine federnde Rastzunge (343) aufweisen und deren Federrichtung rechtwinklig zur Längserstreckung dieses Befestigungsvorsprungs (341) ist, wobei insbesondere die Rastmittel (343) von dem Befestigungsvorsprung rahmenartig (341) umgeben sind.

10. Heizeinrichtung mit einer Induktionsheizspule (19) und mit einer Sensorvorrichtung (30, 230, 330) nach einem der vorhergehenden Ansprüche, **dadurch gekennzeichnet, dass** die Heizeinrichtung (17) mindestens zwei eigenstabile Flächenteile (21, 321) aufweist, insbesondere bestehend aus dünnen Mikanitscheiben (21, 321), an welchen die Induktionsheizspule (19) angeordnet ist, wobei eine Sensorvorrichtung (30, 230, 330) nach einem der vorhergehenden Ansprüche mindestens an einem Außenrand der Induktionsheizspule (19) an und zwischen den beiden Flächenteilen (21, 321) befestigt ist und dazu der Befestigungsabschnitt (40, 45, 140, 240, 245, 340) zwischen die beiden Flächenteile (21, 321) eingreift, wobei er vorzugsweise weitgehend oder vollständig spielfrei eingreift.

11. Heizeinrichtung nach Anspruch 10, **dadurch gekennzeichnet, dass** unten an einem Flächenteil (21, 321), vorzugsweise unten an dem untersten Flächenteil (21, 321), längliche Ferritstäbe (25) angeordnet sind, wobei die Halteeinrichtung (35, 135) mit zwei Befestigungsvorsprüngen (41, 41', 46, 46', 141, 141') an Seiten eines Ferritstabes (25) anliegt, so dass der Ferritstab (25) in der dazwischenliegenden Befestigungsausnehmung (44, 47, 144, 344) verläuft.

12. Heizeinrichtung nach einem der Ansprüche 10 oder 11, **dadurch gekennzeichnet, dass** die Sensorvorrichtung (230) ausgebildet ist nach Anspruch 8 und 9 und an der Außenseite der Induktionsheizspule (19) angeordnet ist derart, dass mindestens eines der Flächenteile (21, 321) der Induktionsheizspule (19) in der Befestigungsausnehmung (244, 247) der Halteeinrichtung (235) liegt.

13. Heizeinrichtung nach einem der Ansprüche 10 bis 12, **dadurch gekennzeichnet, dass** eine Halteaufnahme (353) als separates Teil ausgebildet ist und zwischen zwei Flächenteilen (321) der Heizeinrichtung (17) angeordnet ist, insbesondere dazwischen festgeklebt ist, wobei die Halteaufnahme (353) mindestens eine Rastkammer (354) aufweist zum Einstecken eines Befestigungsvorsprungs (341) mit einer Rastzunge (343) und in der Rastkammer (354) einen Rastvorsprung (355) aufweist, hinter den die Rastzunge (343) nach dem Einstecken einrastet, wobei vorzugsweise die Rastkammer (354) den Befestigungsvorsprung (341) vollständig umgibt.

14. Kochfeld mit mehreren Heizeinrichtungen (17) nach einem der Ansprüche 10 bis 13 und mit mehreren Sensorvorrichtungen (30, 230, 330) nach einem der Ansprüche 1 bis 9, **dadurch gekennzeichnet, dass** zwischen mindestens zwei Heizeinrichtungen (17) genau eine einzige Sensorvorrichtung (30, 230, 330) angeordnet ist.

15. Kochfeld nach Anspruch 14, **dadurch gekennzeichnet, dass** sämtliche Heizeinrichtungen (17) mit länglichen Außenseiten versehen sind und zwischen zwei benachbarten Heizeinrichtungen (17) eine solche Sensorvorrichtung (30, 230, 330) angeordnet ist, insbesondere eine einzige solche Sensorvorrichtung (30, 230, 330).

## Claims

1. Sensor device (30, 230, 330) for a cooktop (11), wherein the sensor device (30, 230, 330) comprises:
- a sensor element (31, 231, 331) having electrical connections (32, 33, 233), preferably cables (33, 233) as electrical connections,
- a holding device (35, 135, 235) for the sensor element (31, 231, 331),
wherein:
- the holding device (35, 135, 235) has an upper holding area (36, 136, 236, 336) in which the sensor element (31, 231, 331) is held in a precisely positioned manner such that it protrudes beyond the holding device (35, 135, 235),
- the holding area (36, 136, 236, 336) is elongated and has a length that is at least 200% of its width,
- the holding device (35, 135, 235) has a fastening section (40, 45, 140, 240, 245, 340) connected to the holding area (36, 136, 236, 336),
- the at least one fastening section (40, 45, 140, 240, 245, 340) projects in a direction approximately perpendicular to a longitudinal direction of the holding area (36, 136, 236, 336),
**characterized in that**
- the fastening section (40, 45, 140, 240, 245, 340) has fastening projections (41, 41', 46, 46', 141, 141', 241, 241', 246, 246', 341) and fastening recesses (44, 47, 144, 244, 247, 344) for form-fitting fastening of the sensor device (30, 230, 330) in the outer area of a heating device (17) of the cooktop (11) in such a way that at least one fastening projection (41, 41', 46, 46', 141, 141', 241, 241', 246, 246', 341) protrudes laterally for engagement in the heating device (17) for fastening to the heating device (17).

2. Sensor device according to claim 1, **characterized in that** the at least one fastening section (40, 45, 140, 240, 245, 340) protrudes in a direction between 80° and 100° from a longitudinal direction of the holding area (36, 136, 236, 336).

3. Sensor device according to claim 1 or 2, **characterized in that** the holding device (35, 135, 235) has a trough-like elongated sensor element receptacle (37, 137, 237, 337) in the holding area (36, 136, 236, 336) and the sensor element (31, 231, 331) is arranged within the sensor element receptacle (37, 137, 237, 337), wherein preferably the sensor element receptacle (37, 137, 237, 337) has at least one wall (38, 138, 238) on each side of the sensor element (31, 231, 331) at least in the direction parallel to its longitudinal direction, wherein the two walls (38, 138, 238) remain at least 20% to 50% below the highest point of the sensor element (31, 231, 331).

4. Sensor device according to one of the preceding claims, **characterized in that** the fastening section (40, 45, 140, 340) is at least as long as half the length of the holding area (36, 136, 336) in the longitudinal direction, wherein preferably the fastening section (40, 45, 140, 340) is flat, in particular has a constant thickness.

5. Sensor device according to one of the preceding claims, **characterized in that** the fastening section (40, 45, 140, 340) has two fastening projections (41, 41', 46, 46', 141, 141', 341) with a fastening recess (44, 47, 144, 344) between them, wherein the fastening recess (44, 47, 144, 344) has two opposite parallel sides, in particular has or defines a rectangular shape overall, wherein the respective opposite sides each form one side of the fastening projections (41, 41', 46, 46', 141, 141', 341).

6. Sensor device according to one of the preceding claims, **characterized in that** fastening sections (40, 45, 240, 245) protrude in opposite directions from opposite sides of the holding device (35, 235), wherein, in particular, the fastening projections (41, 41', 46, 46', 141, 141', 3 project in opposite directions, wherein, in particular, the fastening sections (40, 45, 240, 245) are identical or mirror-image.

7. Sensor device according to one of claims 1 to 3, **characterized in that** a fastening section (240, 245) is shorter than half the length of the holding area (236) in its longitudinal direction, preferably shorter than 25% of the length of the holding area (236), wherein an upper edge section (241, 246) and a lower edge section (241', 246') are formed at the top and bottom of the fastening section (240, 245) parallel to the holding area (236) as fastening projections (241, 241', 246, 246') with a fastening recess (244, 247) of uniform height between them.

8. Sensor device according to claim 7, **characterized in that** the same fastening projections (241, 241', 246, 246') and fastening recesses (244, 247) are provided along both sides of the holding area (236) are provided along both sides of the holding area (236), wherein the fastening sections (240, 245) protrude in opposite directions, wherein in particular the fastening sections (240, 245) are identical or mirror-image.

9. Sensor device according to one of the preceding claims, **characterized in that** at least one fastening projection (341) has latching means (343) for fastening to a heating device (17) by means of latching, wherein the latching means preferably have a resilient latching tongue (343) and their spring direction is perpendicular to the longitudinal extension of this fastening projection (341), wherein, in particular, the latching means (343) are surrounded by the fastening projection in a frame-like manner (341).

10. Heating device with an induction heating coil (19) and with a sensor device (30, 230, 330) according to one of the preceding claims, **characterized in that** the heating device (17) has at least two inherently stable facial parts (21, 321), in particular consisting of thin micanite discs (21, 321), on which the induction heating coil (19) is arranged, wherein a sensor device (30, 230, 330) according to one of the preceding claims is attached to at least one outer edge of the induction heating coil (19) and between the two facial parts (21, 321), and for this purpose the fastening section (40, 45, 140, 240, 245, 340) engages between the two facial parts (21, 321), preferably engaging largely or completely without play.

11. Heating device according to claim 10, **characterized in that** elongated ferrite rods (25) are arranged at the bottom of one facial part (21, 321), preferably at the bottom of the lowest facial part (21, 321), wherein the holding device (35, 135) with two fastening projections (41, 41', 46, 46', 141, 141') on sides of a ferrite rod (25) so that the ferrite rod (25) runs in the fastening recess (44, 47, 144, 344) between them.

12. Heating device according to one of claims 10 or 11, **characterized in that** the sensor device (230) is designed according to claims 8 and 9 and is arranged on the outside of the induction heating coil (19) in such a way that at least one of the facial parts (21, 321) of the induction heating coil (19) lies in the mounting recess (244, 247) of the holding device (235).

13. Heating device according to one of claims 10 to 12, **characterized in that** a retaining receptacle (353) is formed as a separate part and is arranged between two facial parts (321) of the heating device (17), in particular is glued between them, wherein the retaining receptacle (353) has at least one latching chamber (354) for inserting a fastening projection (341) with a latching tongue (343) and has a latching projection (355) in the latching chamber (354), behind which the latching tongue (343) snaps into after insertion, wherein the latching chamber (354) preferably completely surrounds the fastening projection (341).

14. Cooktop with multiple heating devices (17) according to one of claims 10 to 13 and with multiple sensor devices (30, 230, 330) according to one of claims 1 to 9, **characterized in that** exactly one single sensor device (30, 230, 330) is arranged between at least two heating devices (17).

15. Cooktop according to claim 14, **characterized in that** all heating devices (17) are provided with elongated outer sides and such a sensor device (30, 230, 330) is arranged between two adjacent heating devices (17), in particular a single such sensor device (30, 230, 330). 330) is arranged between two adjacent heating devices (17), in particular a single such sensor device (30, 230, 330).

## Revendications

1. Dispositif capteur (30, 230, 330) pour une plaque de cuisson (11), le dispositif capteur (30, 230, 330) comprenant :
- un élément capteur (31, 231, 331) qui comporte des connexions électriques (32, 33, 233), de préférence des câbles (33, 233) comme connexions électriques,
- un dispositif de fixation (35, 135, 235) pour l'élément capteur (31, 231, 331),
dans lequel:
- le dispositif de fixation (35, 135, 235) comporte une zone de fixation supérieure (36, 136, 236, 336) dans laquelle l'élément capteur (31, 231, 331) est fixé dans une position précise de telle sorte qu'il dépasse du dispositif de fixation (35, 135, 235),
- la zone de fixation (36, 136, 236, 336) est allongée et présente une longueur qui est d'au moins 200 % de sa largeur,
- le dispositif de fixation (35, 135, 235) présente une partie de fixation (40, 45, 140, 240, 245, 340) qui est reliée à la zone de fixation (36, 136, 236, 336),
- la au moins une partie de fixation (40, 45, 140, 240, 245, 340) s'étend dans une direction approximativement perpendiculaire à une direction longitudinale de la zone de fixation (36, 136, 236, 336),
**caractérisé en ce que**
- la partie de fixation (40, 45, 140, 240, 245, 340) comporte des saillies de fixation (41, 41', 46, 46', 141, 141', 241, 241', 246, 246', 341) et des évidements de fixation (44, 47, 144, 244, 247, 344) pour une fixation par complémentarité de forme du dispositif capteur (30, 230, 330) dans la zone extérieure d'un dispositif de chauffage (17) de la plaque de cuisson (11) de telle sorte qu'au moins une saillie de fixation (41, 41', 46, 46', 141, 141', 241, 241', 246, 246', 341) dépasse latéralement pour s'engager dans le dispositif de chauffage (17) afin de se fixer sur le dispositif de chauffage (17).

2. Dispositif capteur selon la revendication 1, **caractérisé en ce que** la au moins une partie de fixation (40, 45, 140, 240, 245, 340) s'étend dans une direction comprise entre 80° et 100° par rapport à une direction longitudinale de la zone de fixation (36, 136, 236, 336).

3. Dispositif capteur selon la revendication 1 ou 2, **caractérisé en ce que** le dispositif de fixation (35, 135, 235) présente, dans la zone de fixation (36, 136, 236, 336), un logement d'élément capteur (37, 137, 237, 337) et que l'élément capteur (31, 231, 331) est disposé à l'intérieur du logement d'élément capteur (37, 137, 237, 337), le logement d'élément capteur (37, 137, 237, 337) comporte au moins une paroi (38, 138, 238) de chaque côté de l'élément capteur (31, 231, 331), au moins dans une direction parallèle à sa direction longitudinale, les deux parois (38, 138, 238) restent au moins 20 % à 50 % en dessous du point le plus haut de l'élément capteur (31, 231, 331).

4. Dispositif capteur selon l'une des revendications précédentes, **caractérisé en ce que** la partie de fixation (40, 45, 140, 340) est au moins aussi longue que la moitié de la longueur de la zone de fixation (36, 136, 336) dans le sens longitudinal, la partie de fixation (40, 45, 140, 340) étant de préférence plate, en particulier d'épaisseur constante.

5. Dispositif capteur selon l'une des revendications précédentes, **caractérisé en ce que** la partie de fixation (40, 45, 140, 340) présente deux saillies de fixation (41, 41', 46, 46', 141, 141', 341) avec un évidement de fixation (44, 47, 144, 344) entre celles-ci, l'évidement de fixation (44, 47, 144, 344) deux côtés parallèles opposés, en particulier une forme rectangulaire globale, les côtés opposés formant chacun un côté des saillies de fixation (41, 41', 46, 46', 141, 141', 341).

6. Dispositif capteur selon l'une des revendications précédentes, **caractérisé en ce que** des parties de fixation (40, 45, 240, 245) font saillie dans des directions opposées à partir des côtés opposés du dispositif de fixation (35, 235) s'étendent dans des directions opposées, les parties de fixation (40, 45, 240, 245) étant notamment identiques ou symétriques.

7. Dispositif capteur selon l'une des revendications 1 à 3, **caractérisé en ce qu'**une partie de fixation (240, 245) est plus courte que la moitié de la longueur de la zone de fixation (236) dans sa direction longitudinale, de préférence plus courte que 25 % de la longueur de la zone de fixation (236), une partie de bord supérieure (241, 246) et une partie de bord inférieure (241', 246') s'étendant parallèlement à la zone de fixation (236) en haut et en bas de la partie de fixation (240, 245) formant des saillies de fixation (241, 241', 246, 246') avec respectivement un évidement de fixation (244, 247) de hauteur constante entre eux.

8. Dispositif capteur selon la revendication 7, **caractérisé en ce que** les mêmes saillies de fixation (241, 241', 246, 246') et évidements de fixation (244, 247) sont prévus le long des deux côtés de la zone de fixation (236), les parties de fixation (240, 245) faisant saillie dans des directions opposées, les parties de fixation (240, 245) étant notamment identiques ou symétriques.

9. Dispositif capteur selon l'une des revendications précédentes, **caractérisé en ce qu'**au moins une saillie de fixation (341) comporte des moyens d'encliquetage (343) pour une fixation sur un dispositif de chauffage (17) au moyen d'un encliquetage, les moyens d'encliquetage comportant de préférence une languette d'encliquetage élastique (343) dont la direction élastique est perpendiculaire à l'extension longitudinale de cette saillie de fixation (341), les moyens d'encliquetage (343) étant notamment entourés par la saillie de fixation (341) à la manière d'un cadre.

10. Dispositif de chauffage comprenant une bobine de chauffage par induction (19) et un dispositif capteur (30, 230, 330) selon l'une des revendications précédentes, **caractérisé en ce que** le dispositif de chauffage (17) présente au moins deux éléments plats intrinsèquement stables (21, 321), composées en particulier de minces disques de micanite (21, 321) sur lesquels est disposée la bobine de chauffage par induction (19), un dispositif capteur (30, 230, 330) selon l'une des revendications précédentes est fixé au moins sur un bord extérieur de la bobine de chauffage par induction (19) et entre les deux éléments plats (21, 321), et à cet effet, la partie de fixation (40, 45, 140, 240, 245, 340) s'engage entre les deux éléments plats (21, 321), de préférence sans jeu ou presque sans jeu.

11. Dispositif de chauffage selon la revendication 10, **caractérisé en ce que** des barres de ferrite allongées (25) sont disposées en bas sur un élément plat (21, 321), de préférence en bas sur l'élément plat le plus bas (21, 321), des barres de ferrite allongées (25) sont disposées, le dispositif de fixation (35, 135) s'appuyant avec deux saillies de fixation (41, 41', 46, 46', 141, 141') sur les barres de ferrite allongées (25), de sorte que la barre de ferrite allongée (25) s'étend dans l'évidement de fixation (44, 47, 144, 344) situé entre celles-ci.

12. Dispositif de chauffage selon l'une des revendications 10 ou 11, **caractérisé en ce que** le dispositif capteur (230) est conçu selon les revendications 8 et 9 et est disposé sur la face extérieure de la bobine de chauffage par induction (19) de telle sorte qu'au moins l'une des éléments plats (21, 321) de la bobine de chauffage par induction (19) se trouve dans l'évidement de fixation (244, 247) du dispositif de fixation (235).

13. Dispositif de chauffage selon l'une des revendications 10 à 12, **caractérisé en ce qu'**un logement de retenue (353) est formé comme une pièce séparée et est disposé entre deux éléments plats (321) du dispositif de chauffage (17), en particulier collé entre celles-ci, le logement de retenue (353) comporte au moins une chambre d'encliquetage (354) pour l'insertion d'une saillie de fixation (341) avec une languette d'encliquetage (343) et comporte dans la chambre d'encliquetage (354) une saillie d'encliquetage (355) derrière laquelle la languette d'encliquetage (343) s'enclenche après l'insertion, la chambre d'enclenchement (354) entourant de préférence complètement la saillie de fixation (341).

14. Plaque de cuisson avec plusieurs dispositifs de chauffage (17) selon l'une des revendications 10 à 13 et avec plusieurs dispositifs de détection (30, 230, 330) selon l'une des revendications 1 à 9, **caractérisée en ce qu'**exactement un seul dispositif capteur (30, 230, 330) est disposé entre au moins deux dispositifs de chauffage (17).

15. Plaque de cuisson selon la revendication 14, **caractérisée en ce que** tous les dispositifs de chauffage (17) sont pourvus de côtés extérieurs allongés et qu'un tel dispositif capteur (30, 230, 330) est disposé entre deux dispositifs de chauffage adjacents (17), en particulier un seul dispositif capteur (30, 230, 330).
